(19) Europäisches Patentamt
European Patent Office
Office européen des brevets

(11) **EP 1 927 995 A2**

(12) **EUROPEAN PATENT APPLICATION**

(43) Date of publication:
**04.06.2008 Bulletin 2008/23**

(51) Int Cl.:
*G21C 17/06* (2006.01)  *G01T 1/167* (2006.01)

(21) Application number: **07121334.2**

(22) Date of filing: **22.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **29.11.2006 US 606309**

(71) Applicant: **Global Nuclear Fuel-Americas, LLC Wilmington,**
**North Carolina 28401 (US)**

(72) Inventors:
• **Earnhart, Jonathan R.**
**Wilmington, NC 28409 (US)**
• **Wazybok, Dave F.**
**Castle Hayne, NC 28429-5770 (US)**
• **Hudson, John D.**
**Wilmington, NC 28409 (US)**
• **Parker, Steve T.**
**Wilmington, NC 28409 (US)**
• **Jansen, Floribertus P.M. Heukensfeldt**
**Ballston Lake, NY 12019 (US)**

(74) Representative: **Illingworth-Law, William Illingworth**
**GE International Inc.**
**London Patent Operation**
**15 John Adam Street**
**London WC2N 6LU (GB)**

(54) **System and method for stabilizing the measurement of radioactivity**

(57) A system and method for generating a stabilized measurement of radioactivity from a radiation measurement system 30 including determining a stabilization factor correlating a change in measured gamma emissions about a measurement threshold to a change in measured gamma emission about a stabilization threshold, determining a calibration count of gamma emissions greater than the stabilization threshold from a stabilization source 46, measuring gamma emissions greater than the measurement threshold from a radioactive source having unknown radioactivity, detecting gamma emissions from the stabilization source 46 greater than the stabilization threshold responsive to the measuring, determining a drift about the stabilization threshold responsive to the calibration count and the detected gamma emissions, calculating a stabilized count of measured gamma emissions responsive to the measured gamma emissions greater than the measurement threshold, the stabilization factor, and the drift, and generating the stabilized measurement of radioactivity responsive to the stabilized count of measured gamma emissions.

FIG. 7

**Description**

FIELD

The present disclosure relates to radioactivity measurement systems and methods including systems and methods for measuring radioactivity of fuel in nuclear reactor fuel rods.

BACKGROUND

The statements in this section merely provide background information related to the present disclosure and may not constitute prior art.

Nuclear reactors are typically refueled periodically with radioactive fuel contained within fuel rods sufficient to maintain operation throughout an operating cycle. Nuclear fuels include uranium and/or plutonium in suitable form. For example, in commonly used fuel for water cooled and moderated nuclear power reactors, the fuel comprises uranium dioxide having between 0.7 to 5.0 percent fissile U-235 mixed with fertile U-238. Such nuclear fuel typically is in the form of sintered pellets contained in an elongated cladding tube to form a fuel rod. The fuel rods are arranged in groups and supported in separately replaceable fuel assemblies in the core of the reactor.

It is known to vary the fuel enrichment radially from rod-to-rod within the fuel assemblies and axially along the lengths of the rods to decrease local power peaking and to achieve desired power distribution within the reactor core. The fissile fuel contents of a fuel rod are varied from zone-to-zone along the length of the fuel rod. It is also known to include in the fuel rod a burnable poison such as gadolinium which is a strong neutron absorber but is converted by neutron absorption to an isotope of low neutron absorbing capacity. As in the case of fissile fuel content, the burnable poison content of a fuel element may be varied from zone-to-zone along its length.

The loading of the fuel within the fuel rods requires a screening and measurement system of sufficient accuracy to ensure proper fuel rod loading as well as for tracking the use and inventory of the fuel.

It is desirable for quality control, inventory control, and identification purposes during nuclear fuel assembly manufacturing processes to provide rapid nondestructive methods for determining accurately the amount, enrichment and location of the fissile fuel along the length of a fuel rod. One method for the nondestructive determination of the relative fissile concentration or enrichment of fuel material is "passive scanning". Passive scanning is based upon the quantitative detection of gamma rays of characteristic energy emitted during the natural radioactive decay of a fissile material such as U-235. Further development of the passive scanning method for enrichment measurement involved a correction of the U-235 indication based upon the detection of gamma rays emitted by daughter products of U-238.

However, since U-235 has a relatively long half-life, its spontaneous disintegration rate and consequent gamma ray emission is low. Because of this, and because of the statistical nature of the gamma ray emission, the scanning times required for accurate U-235 determination by the passive scanning method are undesirably long for production fuel use, particularly for low enrichment fuel material. For example, for a fuel rod having a length of 4.5 meters containing fuel of two to three percent enrichment, a passive scanning time in the order of forty minutes is required when a single gamma ray detector was used to obtain suitable accuracy in enrichment measurement. The throughput can be increased (that is, the scanning time for fuel elements can be reduced) by the use of a plurality of gamma ray detectors serially arranged adjacent to the fuel element being scanned. The gamma ray counts from the detectors attributable to each local segment of the fuel element are accumulated and summed, thus decreasing the scanning time required for a given accuracy in proportion to the square root of the number of detectors employed.

Another method for the simultaneous nondestructive determination of the enrichment and fissile content of the fuel material of a fuel rod is known as "active scanning". In this method, the fuel rod is moved past a source of thermal neutrons and the gamma radiation from successive local portions of the fuel rod resulting from the neutron-induced fission of the fissile material, such as U-235, is detected. The radiation count from each local portion is to a great part a function of the thermal neutron flux and the concentration of U-235 in the local portion. Active scanning systems have been in use in commercial nuclear fuel manufacturing facilities because of the increased accuracy of fissile content and enrichment determinations and the increased scanning speed.

The enrichment or radiation is measured using detectors, such as a bismuth germanate (BGO) scintillator with a photomultiplier tube (PMT), by way of example. These detectors measure the gamma ray emissions (such as delayed gamma emissions from the decay of the fission products). The radiation measurement system identifies the gamma emissions that are greater than a predetermined measurement energy threshold, counts these total gamma emissions, and computes an enrichment or radiation level based on the count. For example, when measuring the enrichment of fuel in a fuel rod, a measurement energy threshold of 300 keV is typical. It is thus important for accurate measurement of the enrichment that the gain of the photomultiplier tube, and thus the location of the energy threshold, does not change over time. However, for enrichments near five percent, the count rate is over 200,000 cps. This approaches the limitations of the photomultiplier tube and gain instabilities in the detector and the measurement system occur. Photomultiplier fatigue is a significant cause of gain decay during measurement.

Changes in gain are believed to be produced by space-charge effects at the dynode structures in the photomultiplier tube at the higher count rates, e.g., higher levels of radioactivity and/or enrichment. Additionally, during radioactivity measurements of multiple radioactive sources of unknown radioactivity, the duty cycle of the count rates varies. Residual charges on a dynode structure create a change in the gain of the tube between measurements. These changes in gain between measurements cause shifts or variations in gain in the detector and the counting system that effectively shift the spectrum of detected gamma emissions to the left or right with respect to the measurement threshold, thereby producing a change in the count of gamma emissions. This can also create an inconsistent and unknown hysteresis that is dependent on immediate measurement history, timing of measurements, and timing of measurement intervals. The dependence of the accuracy of the measurements on the immediate run history makes it very difficult to control or predict the gain drift due to the uncontrolled nature of the measurement process and environment. Changes in gain are interpreted by the production system as changes in measured radioactivity, such as fuel enrichment in a fuel rod, thereby introducing measurement errors.

As such, current radioactivity measurement systems and techniques for the determination of radioactivity and nuclear fuel enrichment are not as accurate as they could be and can produce false rejects that often requires expensive and labor intensive retesting. Thus, there remains a need for accurate methods and means for rapidly and accurately measuring fissile content, radioactivity, and/or enrichment of radioactive sources having unknown levels of radioactivity.

SUMMARY

The inventors hereof have succeeded at designing methods and systems for stabilizing the gain of a radiation detector and for stabilizing radiation detection systems associated with fuel in a nuclear fuel rod as well as any other radioactive source generating gamma emissions. In various operations, the methods and systems described by the exemplary embodiments herein can provide for improved stabilized radiation detection and measurement even in the presence of detector and detection system measurement drift, instabilities, and other measurement system-induced changes and shifts in gamma emission counts that have traditionally limited accurate radiation measurement.

According to one aspect, a system for stabilizing a measurement of radioactivity includes a stabilization source configured to generate predetermined gamma emissions, one or more detectors for detecting gamma emissions from the stabilization source and any radioactive source having unknown radioactivity positioned proximate to the detector for measurement by the system, and a processing module coupled to the one or more detectors for determining counts from gamma emissions greater than a measurement threshold and counts greater than a stabilization threshold, the stabilization threshold being different than the measurement threshold, and configured to determine a stabilization factor responsive to the counts greater than the measurement threshold and the counts greater than the stabilization threshold, to determine a drift in the measurement of radioactivity responsive to the counts greater than the stabilization threshold, to calculate a stabilized count of measured gamma emissions responsive to the counts greater than the measurement threshold, the stabilization factor, and the drift, and to generate a stabilized measurement of radioactivity responsive to the stabilized count.

According to yet another aspect, a system for determining an enrichment of a fuel rod for a nuclear reactor includes means for generating reference gamma emissions having predetermined levels, means for measuring gamma emissions greater than a measurement threshold generated by the fuel rod, means for measuring the reference gamma emissions greater than a stabilization threshold, means for determining a stabilization factor correlating a change about the measurement threshold to a change about the stabilization threshold, means for determining a drift in the means for measuring the reference gamma emissions, and means for calculating the enrichment of the fuel rod responsive to the measured gamma emissions from the fuel rod, the drift, and the stabilization factor.

According to still another aspect, a method for generating a stabilized measurement of radioactivity from a radiation measurement system including determining a stabilization factor correlating a change in measured gamma emissions about a measurement threshold to a change in measured gamma emission about a stabilization threshold, determining a calibration count of gamma emissions greater than the stabilization threshold from a stabilization source, measuring gamma emissions greater than the measurement threshold from a radioactive source having unknown radioactivity, detecting gamma emissions from the stabilization source greater than the stabilization threshold responsive to the measuring, determining a drift about the stabilization threshold responsive to the calibration count and the detected gamma emissions, calculating a stabilized count of measured gamma emissions responsive to the measured gamma emissions greater than the measurement threshold, the stabilization factor, and the drift, and generating the stabilized measurement of radioactivity responsive to the stabilized count of measured gamma emissions.

Further aspects of the present invention will be in part apparent and in part pointed out below. It should be understood that various aspects of the disclosure may be implemented individually or in combination with one another. It should also be understood that the detailed description and drawings, while indicating certain exemplary embodiments, are intended for purposes of illustration only and should not be construed as limiting the scope of the disclosure.

BRIEF DESCRIPTION OF THE DRAWINGS

FIG. 1 is a graphical plot of the gamma emission count spectrum detected from radioactive fuel in a fuel rod having known enrichment of 4.9 percent.

FIG. 2 is a graph of an energy spectrum of an exemplary Cs-137 stabilization source measured with the detector according to one exemplary embodiment of a stabilization source.

FIG. 3 is a graph of two calibration correlation curves, one plotting gamma emission counts greater than a stabilization threshold to a level of associated enrichment and a second plotting gamma emission counts greater than a measurement threshold to a level of associated enrichment, according to one exemplary embodiment.

FIG. 4 is a graphical output of a stabilized measurement of enrichment for fuel in a fuel rod according to one exemplary embodiment.

FIG. 5 is a block diagram of a measurement system with stabilized measurement according to one exemplary embodiment.

FIG. 6 is a block diagram schematic of a detection system with measurement channel and stabilization channels and a supporting processing module according to another exemplary embodiment.

FIG. 7 is a block diagram of a computer operating environment for one or more components of a radioactivity measurement system according one exemplary embodiment.

It should be understood that throughout the drawings, corresponding reference numerals indicate like or corresponding parts and features.

DETAILED DESCRIPTION

The following description is merely exemplary in nature and is not intended to limit the present disclosure or the disclosure's applications or uses.

In order to measure radioactivity, a detector and detection system detects gamma emissions greater than a predetermined measurement threshold of energy, counts those gamma emissions, identifies the total count of gamma emissions greater than the measurement threshold, and then correlates that total count to a predetermined or known level of radioactivity. The detected gamma emissions can be any gamma emissions, and are often delayed gamma emissions from fission, such as when determining the radioactivity and/or enrichment of a radioactive material such as fuel in a fuel rod.

A correlation between the gamma emission count and the radiation level is determined during a calibration of the measurement system by utilizing a standard calibration radioactive source having one or more known levels of radioactivity or enrichment. Later, during measurement of a radioactive source having an unknown level of radioactivity, the measured raw data for radioactive gamma emissions is determined as the integral of the gamma emission spectrum greater than the measurement threshold. For example, this can include the integral of the delayed gamma fission spectrum, $F(E)$, over a measurement energy threshold $T_E$. This can be any energy level and in one exemplary embodiment, the measurement energy threshold is about 300keV, which is known to be used to measure delayed gamma emissions from fission from nuclear fuel. This count of gamma emissions can be represented by equation [1], in one exemplary embodiment:

$$N_F(T_E) = \int_{T_E}^{\infty} F(E)\,dE \qquad [1]$$

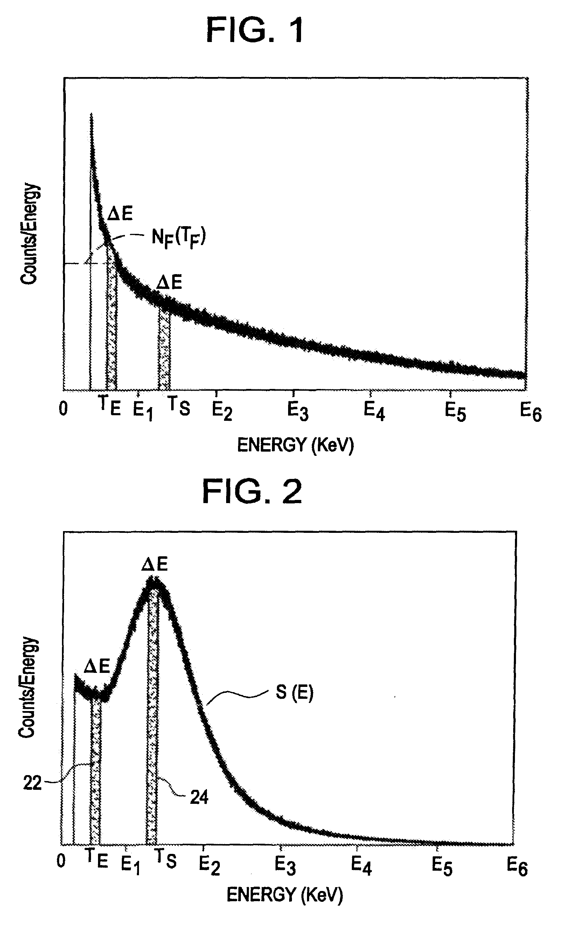

In this exemplary embodiment, the total count of gamma emissions $N_F$ greater than the measurement threshold $T_E$ and denoted as $N_F(T_E)$ is used to correlate to a level of measured radioactivity. Fig. 1 illustrates a plot of gamma emissions detected from fuel in a fuel rod having known enrichment of 4.9 percent. The total count $N_F(T_E)$ is shown as a function of measurement threshold energy $T_E$, e.g., the gamma emission count as received from the radiation detector as a function of the measurement threshold $T_E$.

During the calibration, the measured gamma emissions greater than the measurement threshold $N_F(T_E)$ is correlated to an associated value of known radioactivity through a predetermined relationship such as an equation, curve, or table. The radioactivity value $W_{T_E}$ can be represented in one embodiment as equation [2]:

$$W_{T_E} = a_1 N_F^3(T_E) + a_2 N_F^2(T_E) + a_3 N_F(T_E) + a_4 \qquad [2]$$

The relationship between gamma emission count and the measured radioactivity level can be defined, at least in part, by correlation coefficients, also known as enrichment bias constants. These correlation coefficients $a_1$, $a_2$, $a_3$ and $a_4$ can be determined by a number of known methods. For example, in one embodiment the correlation coefficients can be determined by least squares fit of the count of gamma emission counts from the measurement of one or more calibration sources having known levels of radioactivity. Generally, these coefficients are determined at the time of calibration to define the correlation between various total counts of gamma emissions greater than the measurement threshold ($N_F(T_E)$) and their associated levels of radioactivity.

As noted above, accuracy is often essential in these measurements. For example, in measuring the level of enrichment of fuel for nuclear fuel rods, it is desirable that the measurement system be capable of measuring average enrichments to better than 0.2 percent relative accuracy. Other similar types of requirements are also often required in other radiation measurement applications.

However, changes in the measurement of gamma emissions can occur with a measurement system drift or gain shift due to a variety of factors including a gain instability of the detector/sensor at the peak of radioactivity being measured. These can include detector saturation, instability and/or fatigue of the detectors that cause the detector to count either too few or too many gamma emissions. This can also include a space-charge effect at the dynode structure of the photomultiplier tube (PMT). Additionally, between multiple measurements, residual charges on the dynode of the photomultiplier tube in the detector can change the gain of the detector from one measurement to the next. This change of gain produces variations from measurement to measurement, and can result in a constant variation or shifts in the measurement gamma emissions and energy spectrum. Other measurement system factors affecting the stability of the measurement system include changes in the input voltage levels, temperature, and changes in the high voltage to the photomultiplier tube. These changes in the detection, counting and measurement system provide a false counting of gamma emissions relative to the measurement threshold that results in an apparent change in the measured radioactivity.

In various embodiments of this disclosure, the measurement processes and systems provide for stabilization of these counts to offset and adjust for these measurement system changes. The measurement system for stabilized measurement includes one or more radiation sensors or detectors that can exhibit instabilities during operations, due in part to the effects of multiple measurements. One or more stabilization reference sources are positioned proximate to each detector such that the detector monitors the stabilization source before and after, and possibly also during the measurement of radioactive sources. Generally, this stabilization reference source provides a background reference level of gamma emissions and is generally a radioactive source having a known predetermined spectrum of gamma emissions. The stabilization source provides a substantially consistent low level spectrum of gamma emissions. In some preferred embodiments, the stabilization source provides a substantially constant radiation output spectrum, such as a radioisotope with a 30 year half life, e.g., stable gamma emission spectrum output over time and at least with respect to the measurement time intervals. For example, the stabilization source can include a catalyst radioactive source such as a radioactive isotope having a half life greater than one year. These can include, but are not limited to, Cs-137, and other radionuclide such as Am-241, Co-60, Cs-134, and Na-22, by way of examples.

In one embodiment, the stabilization source is a 10.0 $\mu$Ci source using Cs-137 that generates gamma emissions providing adequate counting statistics for stabilization correlation without overwhelming the gamma emissions being measured and, therefore, the measurement process. Fig. 2 displays an energy spectrum of an exemplary Cs-137 source measured with the detector having a BGO scintillator. As noted in Fig. 2, two different thresholds are displayed, the measurement threshold $T_E$ is selected to optimize the measurement of the fission spectrum. A stabilization threshold $T_S$ is selected to optimize the detection and measurement of drift or changes in the measurement system. The measurement threshold $T_E$ is generally not the best energy level or threshold for detecting shifts or changes associated with the measurement system. To optimize the stabilization of the system, the stabilization threshold can be selected as a photopeak of the detector, a maximized sensitivity of the stabilization system, a peak of the stabilization source, and an energy level greater than an energy level of the measurement threshold. For example, the stabilization threshold can be selected to optimize or improve the signal to noise ratio (improve sensitivity of the stabilization process) where the stabilization threshold $T_S$ is a point where any deviation above or below the threshold energy level has a slope or incremental change that is greater than the slope of the energy about the measurement threshold, $T_E$. In this manner, the relative sensitivity to any shift or instability in the measurement system can be correlated from a change about the stabilization threshold to a change about the measurement threshold. For instance, referring again to Fig. 2, in one embodiment a ratio of the change about the stabilization threshold $T_S$ to change about the measurement threshold $T_E$ can be illustrated as a ratio of the shaded area 24 about $T_S$ to the shaded area 22 about $T_E$ to indicate the relative sensitivity to any variation or measurement system shift. As shown in Fig. 2, a change about stabilization threshold $T_S$,

which in this example is at a spectrum peak of between 500 keV and 750 keV for a stabilization source such as Cs-137, provides the higher level of sensitivity to any change or variation in system gain.

With the stabilization source and stabilization threshold selected to optimize the sensitivity of the system to changes about the stabilization threshold, various embodiments described herein provide for stabilizing the counting of the gamma emissions to account for these measurement system instabilities. For example, in one embodiment, a method includes determining a stabilization factor correlating a change in measured gamma emissions about a measurement threshold to a change in measured gamma emission about a stabilization threshold and determining a calibration count of gamma emissions greater than the stabilization threshold from a stabilization source. Such a stabilization factor can be determined at any time, but in one embodiment the stabilization factor is determined during a system calibration. Such a calibration can be on a routine or periodic basis such as once per day, at the beginning of a shift, one or more times per week, once per system activation, by way of example. Generally, the stabilization can be determined by a variety of methods as will be discussed in further detail below, but can include regression analysis, determining a regression fit, determining a plurality of coefficients, plotting a curve, preparing a model, determining a formula, and preparing a table. One or more stabilization factors are determined and stored or saved for utilization during stabilization of system measurements at a later time, e.g., at a time different than calibration when measuring radioactivity levels of a radioactive source having one or more unknown levels of radioactivity.

The method also includes measuring gamma emissions greater than the measurement threshold from a radioactive source having unknown radioactivity and detecting gamma emissions from the stabilization source greater than the stabilization threshold responsive to the measuring. A drift about the stabilization threshold can be determined responsive to the calibration count and the detected gamma emissions. A stabilized count of measured gamma emissions can be calculated or otherwise determined responsive to the measured gamma emissions greater than the measurement threshold and the stabilization factor. A stabilized measurement of radioactivity is then determined as a function of the stabilized count of measured gamma emissions.

The determination of the stabilization factor can include a measurement of a count of gamma emissions generated by the stabilization source and/or gamma emissions generated by a calibration source. The calibration source is a radioactive source having one or more known predetermined levels of radioactivity that provide for a standard reference during calibration. In one embodiment, the calibration source has six or more levels of known radioactivity which are stable over time, at least over the expected calibration intervals.

One or more counts of gamma emissions greater than the stabilization threshold can be determined from the stabilization source and possibly in the presence of the calibration source, in some preferred embodiments. As noted, the stabilization factor can be determined by regression analysis, determining a regression fit, determining a plurality of mathematical formula coefficients representative of the relationship and determining a formula thereof, plotting a curve of the count, preparing a model with the count, and preparing a table of the counts.

For example, in one embodiment a stabilization threshold curve from the counts of gamma emissions greater than the stabilization threshold is determined and from counts of gamma emissions from the stabilization source and/or the calibration source greater than the measurement threshold. Additionally a measurement threshold curve can be determined based on measurements of the calibration source and the stabilization source. The counts of gamma emissions can be taken before, after and during measurement of the counts of the calibration source or any other radioactive source and can be absolute counts or averages of two or more counts. In this embodiment, the stabilization factor can be determined, at least in part, as a ratio of the slope of the measurement threshold curve to the slope of the stabilization threshold curve.

As noted, in some embodiments the stabilization source is placed permanently near the detector in which case the gamma emissions from the stabilization source are continuously present. However, due to their selection as addressed above, the gamma emission spectrum from the stabilization does not interfere with the measurement of gamma emissions from the calibration and/or other radioactive sources.

In operation, the stabilization source is positioned proximate to the detector in the measurement system and the measurement system is calibrated during which calibration parameters are calculated and recorded. These provide a calibration reference to determine the necessary correction to stabilize the later measurements. The measured gamma emissions counts associated with the stabilization source are saved as a reference point during calibration of the system and include the count of gamma emissions from the stabilization source that are greater than the stabilization threshold at calibration, $N_{SO}(T_S)$:

$$N_{S0}(T_S) = \int_{T_S}^{\infty} S(E)dE \qquad\qquad [3]$$

and, the count of gamma emissions from the stabilization source that are greater than the measurement threshold at calibration, $N_{SO}(T_E)$:

$$N_{S0}(T_E) = \int_{T_E}^{\infty} S(E)dE \qquad\qquad [4]$$

Each of these can be a single count of the gamma emissions before and/or after a calibration source having one or more known levels of radioactivity. In one embodiment, a measurement of the gamma emissions is taken before and after each measurement and those measurements are averaged into a single value.

Next, a calibration source having one or more known or predetermined levels of gamma emissions and radioactivity are measured by the measurement system. During this step of the calibration, two relationships are generated.

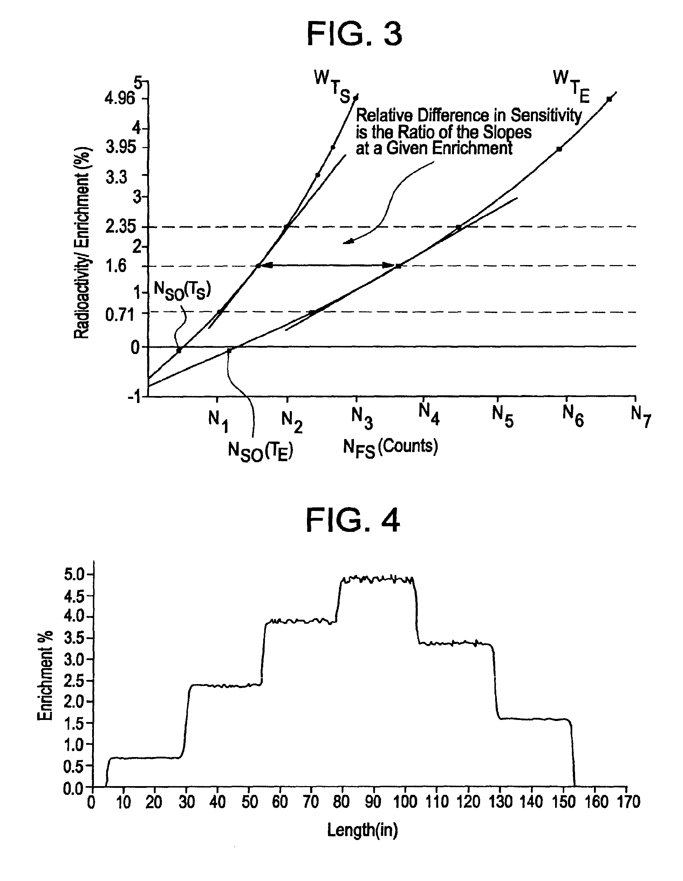

A first relationship correlates a total count of gamma emissions greater than a measurement threshold value $T_E$ as measured and counted by the system. These counted gamma emissions are those generated by a calibration source having known and predetermined levels of radioactivity and by the stabilization source. This can be represented by a formula [5] and/or by a plot or curve as shown in Fig. 3:

$$W_{T_E} = a_{E1}N_{FS}^3(T_E) + a_{E2}N_{FS}^2(T_E) + a_{E3}N_{FS}(T_E) + a_{E4} \qquad\qquad [5]$$

A second relationship correlates a count of gamma emissions greater than a stabilization threshold $T_S$ as measured and counted by the system and as generated by the calibration source and the stabilization source.

$$W_{T_S} = a_{S1}N_{FS}^3(T_S) + a_{S2}N_{FS}^2(T_S) + a_{S3}N_{FS}(T_S) + a_{S4} \qquad\qquad [6]$$

As can be seen in Figure 3, these two calibration relationships as illustrated by equations [5] and [6] can be plotted as curves, one as a function of the measurement threshold, $W_{T_E}$, and the other as a function of the stabilization threshold, $W_{T_S}$.

From this process, a stabilization factor K is determined to indicate the relative change in counts between the stabilization and measurement channels, the relative change about the stabilization threshold to the change about the measurement threshold. This can, in one embodiment, include the determination of a ratio of the counts due to a system drift to the counts greater than the measurement energy threshold $T_E$ with the radioactive source and stabilization source present. The stabilization factor, K, can be represented by equation [7] in one exemplary embodiment:

$$K * \left( \frac{N_S(T_S) - N_{S0}(T_S)}{N_{S0}(T_S)} \right) = K * \left( \frac{\int_{T_S-\Delta E}^{T_S} S(E)dE}{\int_{T_S}^{\infty} S(E)dE} \right) = \frac{\int_{T_E-\Delta E}^{T_E} (F(E) + S(E))dE}{\int_{T_E}^{\infty} (F(E) + S(E))dE} \qquad [7]$$

$N_S(T_S)$ is the gamma emission count of the stabilization source associated with the measurement greater than the stabilization threshold. This can be a single measurement and count, such as before or after the measurement of the measured radioactive source, or can be two or more measurements. In one embodiment, this can be an average of a measurement before and after the measurement of the radioactive source.

The stabilization factor K can also be described, in some embodiments, as a correlation between the two above defined relationships and in one embodiment can be defined as the ratio of the slopes of the two calibration curves evaluated during system calibration as illustrated by equation [8], by way of example:

$$K = \frac{\left.\dfrac{dW_{T_E}}{dN_{FS}}\right|_{N_{S0}(T_E)}}{\left.\dfrac{dW_{T_S}}{dN_{FS}}\right|_{N_{S0}(T_S)}} \qquad [8]$$

In some embodiments, the stabilization factor K is substantially constant over the full range of radioactivity of the measurement system and can be represented as this ratio or a factor representative of the two relationships. A relatively constant stabilization factor K can be defined by a generally constant ratio of a stabilization curve slope to a measurement curve slope over the full range of desired radioactivity measurements. For example, the ratio of equation [8] has been shown to be acceptable over the full range of typical fuel rod fuel enrichments from 0.71 % to 5.0 % as the sensitivity ratio between the two calibration curves is nearly constant over this enrichment range.

However, in other embodiments the stabilization factor K can vary over the desired measurement range. In such embodiments, two or more stabilization factors K can be expressed as an algorithm, a formula, a table, or other relationship that varies as a function of another variable, such as a sub-range of gamma emission counts. While a non-constant/non-linear stabilization factor K is possible and can in some cases define the relationship, in those cases the required methods are complex to implement and an alternative relatively constant stabilization factor K can be selected in the alternative.

Changes in the measurement system, such as instabilities, drift or otherwise, can be quantified by a term that represents the area defined by the amount of the shift or drift, $\Delta E$, (referring again to Fig. 2) which represents, in some embodiments, the counts of gamma emissions including measurement system changes from the calibration that are greater than the measurement energy threshold $T_E$ from the radioactive source being measured. This can be illustrated, by way of example, in a mathematical relationship of equation [9]:

$$N_F(T_E) = \int_{T_E}^{\infty} F(E)dE + \int_{T_E - \Delta E}^{T_E} F(E)dE \qquad [9]$$

The relationship as illustrated by equation [9] can be rearranged to show one embodiment of a stabilization correction that accounts for system measurement changes during measurement operations from that determined during calibration. This stabilization method can be illustrated by the relationship of equation [10]:

$$N_F(T_E) = \int_{T_E}^{\infty} F(E)dE * \left( 1 + \frac{\int_{T_E - \Delta E}^{T_E} F(E)dE}{\int_{T_E}^{\infty} F(E)dE} \right)$$

[10]

From this relationship, a correction to measurements by the measurement system that accounts for changes during the measurement process as compared to that occurring at the time of calibration is possible.

In operation, to obtain a stabilized measurement of a radioactive source having unknown radioactivity after system calibration, the radioactive source is placed proximate to the detector in the measurement system and the gamma emissions are measured by the system with the stabilization source still active and emitting stabilization source gamma emissions. The detector now sees the gamma emission spectra F(E) from the radioactive source being measured and the gamma emission spectra S(E) from the stabilization source greater than the measurement threshold in equation [11] and greater than the stabilization threshold in equation [12]:

$$N_{FS}(T_E) = \int_{T_E}^{\infty} (F(E) + S(E))dE$$

$$[11]$$

and

$$N_{FS}(T_S) = \int_{T_S}^{\infty} (F(E) + S(E))dE$$

$$[12]$$

Additionally, a stabilization measurement is taken at the time of each measurement of an unknown radioactive source. For each radioactive source having one or more unknown levels of radioactivity that needs to be measured, the measured gamma emissions and calculated count of gamma emissions greater than the measurement threshold can include a measurement system shift or drift as illustrated by equation [13]:

$$N_S(T_S) = \int_{T_S}^{\infty} S(E)dE + \int_{T_S - \Delta E}^{T_S} S(E)dE$$

$$[13]$$

Any identified changes in the count of gamma emissions of the stabilization source that are greater than the stabilization threshold, e.g., $N_S(T_S)$ are used to adjust and stabilize the total count of gamma emissions from the radioactive source having unknown radioactivity (typically also in combination with the gamma emissions from the stabilization source in the background) that are measured during a measurement process that are greater than the measurement threshold, $N_{FS}$.

The gamma emission counts that include any measurement system or counting gain shift or drift, $N_{FS}$, can be illustrated by the relationship of equation [14], by way of example:

$$N_{FS}(T_E) = \int_{T_E}^{\infty} \left(F(E) + S(E)\right)dE * \left(1 + \frac{\int_{T_E - \Delta E}^{T_E} \left(F(E) + S(E)\right)dE}{\int_{T_E}^{\infty} \left(F(E) + S(E)\right)dE}\right)$$

$$[14]$$

In this exemplary relationship, the second term in the parenthesis is the variation due to any measurement drift and is removed to stabilize the count of gamma emissions back to the calibrated condition. From this, one exemplary embodiment of a stabilized gamma emission count greater than the measurement threshold from a measurement of an unknown radioactive source, can be reflected in the relationship as illustrated by equation [15]:

$$N_{FS}^{Stabilized}(T_E) = \left(1 - K * \left(\frac{N_S(T_S) - N_{S0}(T_S)}{N_{S0}(T_S)}\right)\right) * \int_{T_E}^{\infty} \left(F(E) + S(E)\right)dE$$

$$[15]$$

This exemplary relationship describes one embodiment of the count of gamma emissions greater than the measurement threshold $T_E$ from the radioactive source being measured in the presence of the stabilization source with the effect from the measurement system drift being removed, e.g., providing the stabilized count of gamma emissions.

As noted above, the stabilization factor K and the gamma emissions of the stabilization source at calibration that are greater than the stabilization threshold $N_{S0}(T_S)$ are determined and stored during system calibration. During a measurement, the gamma emissions measured from the stabilization source that are greater than the stabilization threshold at the time of measurement $N_S(T_S)$ and the measured gamma emissions from the radioactive source having unknown radioactivity in combination with the stabilization source (as identified by the integral term

$\int_{T_E}^{\infty}\big(F(E)+S(E)\big)dE$ ), are measured by the detector and the measurement system in association with each subsequent measurement. Typically, such measurements are performed following manufacture of the radioactive source, such as a fuel rod or other radioactive source, and the manufactured radioactivity must be measured and confirmed in order to verify proper manufacture and to account for radioactive material used in the manufacturing process.

The adjusted or stabilized count of gamma emissions greater than the measurement threshold $T_E$, e.g.,

$N_{FS}^{Stabilized}(T_E)$, is utilized along with the correlation coefficients as determined at calibration to provide a stabilized measurement value of radioactivity $W_{TE}^{Stabilized}$ as illustrated by equation [16]:

$$W_{TE}^{Stabilized} = a_{E1}N_{FS}^{Stabilized\,3}(T_E) + a_{E2}N_{FS}^{Stabilized\,2}(T_E) + a_{E3}N_{FS}^{Stabilized}(T_E) + a_{E4}$$

$$[16]$$

An example of a stabilized measurement of radioactivity or enrichment of fuel in a fuel rod is illustrated in Fig. 4. As shown, the enrichment zones along the length of the fuel rod are clearly defined. Such a stabilized measurement value has been shown by the inventors to provide improved measurement of gamma emissions and therefore radioactivity. For example, the inventors hereof have been successful in demonstrating one embodiment of this disclosure a stabilization measurement system capable of measuring fuel enrichment that removed a systematic component to the measurement error and reduced the fuel rod to fuel rod measurement variance by 20 percent. This represents substantial improvements over prior systems and practices and exceeds the required measurement accuracies.

Various embodiments of systems and combinations of apparatus can be utilized to implement and practice one or more of the methods and processes as described herein. A system for stabilizing a measurement of radioactivity includes a stabilization source configured to generate predetermined gamma emissions, one or more detectors for detecting gamma emissions from the stabilization source and any radioactive source having unknown radioactivity positioned proximate to the detector for measurement by the system, and a processing module coupled to the one or more detectors for receiving the counts from gamma emissions greater than a measurement threshold and counts greater than a stabilization threshold, the stabilization threshold being different than the measurement threshold, and configured to determine a stabilization factor responsive to the counts greater than the measurement threshold and the counts greater than the stabilization threshold, to determine a drift in the measurement of radioactivity responsive to the counts greater than the stabilization threshold, to calculate a stabilized count of measured gamma emissions responsive to the counts greater than the measurement threshold, the stabilization factor, and the drift, and to generate a stabilized measurement of radioactivity responsive to the stabilized count.

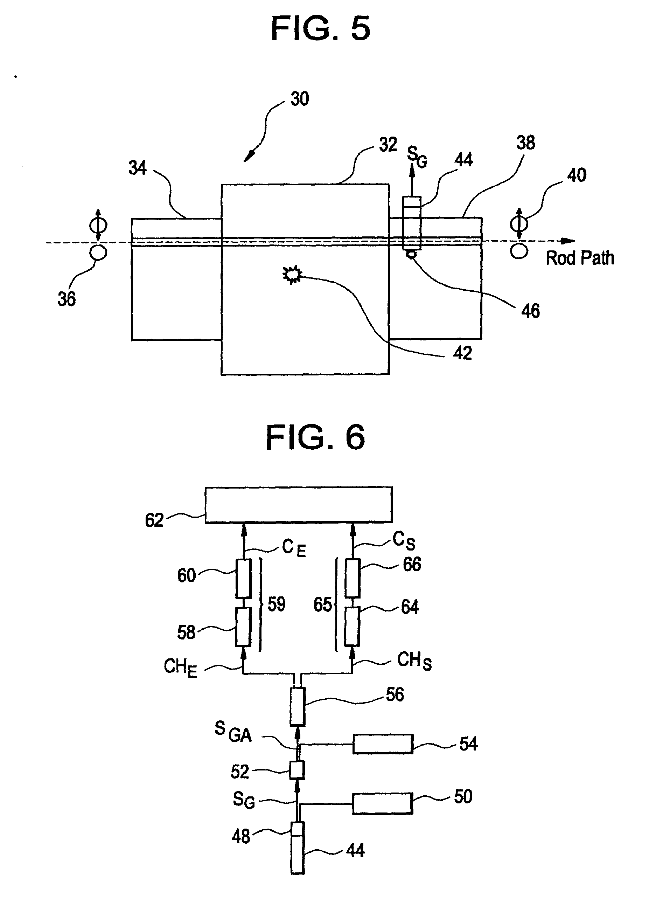

Referring now to Fig. 5, a measurement system 30 for the stabilized measurement of radioactivity of fuel in fuel rods is shown by way of one exemplary embodiment. As shown, an irradiation cask 32 has an input 34 for receiving a radioactive source to be measured. In this case, input feeds 36 are utilized to propel a fuel rod into the cask 32. An output 38 also includes output feeds 40 for continuing the feeding of the fuel rod through the cask 32. One or more measurement sources 42 within the cask 32 provide for an active irradiation of the fuel in the fuel rod as the fuel rod traverses through the cask 32. A detector 44 is positioned in the output 38 for detecting gamma emissions such as the delayed gamma emissions from fission induced by the measurement source 42 in the fuel of the fuel rod. Additionally, a stabilization source 46 is positioned in the output 38 and proximate to the detector 44 such that the detector 44 detects the gamma emissions generated by the stabilization source 46 in the absence and/or the presence of a fuel rod in the output 38. As shown, the detector 44 can include a BGO scintillator with a photomultiplier tube that generates a signal $S_G$ indicative of detected counts of gamma emissions.

As shown in Fig. 6, the measurement system includes each detector 44 having a photomultiplier tube 48 that receives a biasing voltage from high voltage source 50. The photomultiplier tube 48 generates the raw full spectrum gamma emission count signal $S_G$ that is received by a preamplifier 52. The preamplifier 52 receives a reference voltage from low voltage power supply 54. The amplified signal $S_{GA}$ is provided to a splitter 56 to create two channels, a measurement channel $CH_E$ and a stabilization channel $CH_S$. A measurement discriminator 58 receives the measurement channel $CH_E$ having a portion of the gamma emissions received by the detector and high pass filters those gamma emission counts having an energy level greater than the measurement threshold $T_E$. In one exemplary embodiment, the measurement discriminator 58 is a constant fraction discriminator. Generally, the measurement discriminator channel 59 is set to measure gamma rays over the measurement threshold $T_E$ to produce a measurement signal indicative of the gamma emissions greater than the measurement threshold $T_E$. These measurement gamma emissions are passed to a measurement scalar 60 that passes on the counts of gamma emissions greater than the measurement threshold $T_E$ to a processing module 62.

Similarly, a stabilization discriminator channel 65 is set to measure gamma rays over a stabilization threshold $T_S$ to create a stabilization signal indicative of the gamma emissions greater than the stabilization threshold $T_S$. The stabilization discriminator 64 uses the stabilization channel $CH_S$ with the stabilization threshold ($T_S$) optimized to detect any measurement system drift or gain. A stabilization discriminator 64 receives the stabilization channel CHs having a portion of the gamma emissions received by the detector 44 and filters out those gamma emission counts having an energy level greater than the stabilization threshold $T_S$. In one exemplary embodiment, the stabilization discriminator 64 is a constant fraction discriminator. These measurement gamma emissions are passed to a stabilization scalar 66 that passes on the counts of gamma emissions greater than the stabilization threshold $T_S$ to the processing module 62.

The processing system or module 62 can include a processor and memory, as with any known computer system, and is configured to determine the stabilization factor K at the time of calibration and to determine the drift associated with a measurement as compared to the calibration. The processing module 62 receives the counts greater than the measurement threshold from the measurement discriminator and receives the counts greater than the stabilization threshold from the stabilization discriminator and, during calibration, determines a stabilization factor K responsive to the two received counts. Additionally, during calibration a reference count of gamma rays from only the stabilization source can be received and stored. During measurement (after calibration), the processing module can determine a drift in the measurement system responsive to the counts greater than the stabilization threshold. From this it can calculate a stabilized count of measured gamma emissions responsive to the counts greater than the measurement threshold, the stabilization factor K, and the drift, and generate a stabilized measurement of radioactivity responsive to the stabilized count.

The processing module 62 also provides a stabilized gamma count for determination of a stabilized count of gamma emissions. The stabilized count of gamma emissions is then utilized by the processing module 62 to determine the radioactivity of the measured radioactive source, e.g., such as the enrichment of fuel in a fuel rod, by way of example. The processing module 62 can also develop the correlation between these counts of gamma emissions from which the measured radioactivity is later determined during measurement after adjusting the counts of gamma emissions due to system changes from the time of calibration.

As noted above, in some embodiments the processing module 62 can also be configured to determine a slope of a first calibration curve, a slope of a second calibration curve plotting the counts greater than the measurement threshold $T_E$, a ratio of the two slopes, a relationship between a count of gamma emissions greater than the measurement threshold $T_E$ during calibration responsive to the calibration source to a measured level of radioactivity and apply the stabilized count of measured gamma emissions to the relationship to generate a stabilized measurement of radioactivity. This relationship can be determined by a regression analysis, determining a regression fit, determining a plurality of coefficients, plotting a curve, preparing a model, determining a formula, and preparing a table. The processing module 62 receives the counted gamma emissions and monitors and stores the counts of gamma emissions for each and every measurement and for the counts between measurements.

If during a measurement, a change from the calibration is identified, the stabilization factor K and the identified change is applied to the measured count of gamma emissions to remove the impact of the drift and therefore stabilize the count prior to correlation with the level of radioactivity associated with the count as determined at the time of calibration.

In some embodiments, the stabilization source 46 and the detector 44 can be configured to enable the detector 44 to continuously detect gamma emissions from the stabilization source 46 during the presence and the absence of a radioactive source. However, in one embodiment the system can be configured such that the detector 44 can selectively receive gamma emissions from the stabilization source 46 only during an absence of the radioactive source, either during calibration, and/or during subsequent measurements.

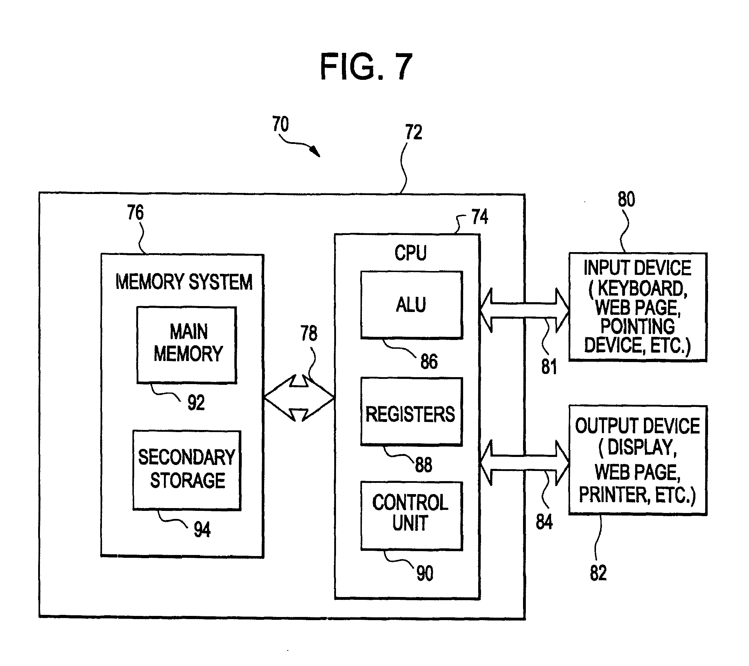

Referring now to Fig. 7, an operating environment for one or more illustrated embodiments for stabilizing the measurement of radioactivity can include various components or modules as described to determine the stabilization factor K and the drift, calculate the stabilized count, and to generate the stabilized measurement of radioactivity. This can include the processing module 62, among other elements, having a computer or processing system 70 having a computer 72 that comprises at least one high speed processing unit (CPU) 74, in conjunction with a memory system 76 interconnected with at least one bus structure 78, an input device 80, and an output device 82.

The illustrated CPU 74 is of familiar design and includes an arithmetic logic unit (ALU) 86 for performing computations, a collection of registers 88 for temporary storage of data and instructions, and a control unit 90 for controlling operation of the processing system 70. Any of a variety of processors, including at least those from Digital Equipment, Sun, MIPS, Motorola/Freescale, NEC, Intel, Cyrix, AMD, HP, and Nexgen, is equally preferred for the CPU 74. The illustrated embodiment of the disclosure operates on an operating system designed to be portable to any of these processing platforms.

The memory system 76 generally includes high-speed main memory 92 in the form of a medium such as random access memory (RAM) and read only memory (ROM) semiconductor devices, and secondary storage 94 in the form of long term storage mediums such as floppy disks, hard disks, tape, CD-ROM, flash memory, by way of examples, and other devices that store data using electrical, magnetic, optical or other recording media. The main memory 92 also can include a video display memory for displaying images through a display device. Those skilled in the art will recognize that the memory system 76 can comprise a variety of alternative components having a variety of storage capacities.

The input device 80 and output device 82 are also familiar and can be implemented associated with the local and remote user interfaces as well as a controller, remote operational system and operations system, by way of example. The input device 80 can include a keyboard, a mouse, a physical transducer (e.g. a microphone), by way of examples, and is interconnected to the computer 72 via an input interface 81. The output device 82 can includes a display, a printer, a transducer (e.g. a speaker), by way of examples, and be interconnected to the computer 72 via an output interface 84. Some devices, such as a network adapter or a modem, can be used as input and/or output devices.

As is familiar to those skilled in the art, the processing system 70 further includes an operating system and at least one application program. The operating system is the set of software which controls the computer system's operation and the allocation of resources. The application program is the set of software that performs a task desired by the user, using computer resources made available through the operating system. Both are resident in the illustrated memory system 76. As known to those skilled in the art, some of the methods, processes, and/or functions described herein can be implemented as software and stored on various types of computer readable medium as computer executable instructions. In various embodiments of the stabilized radioactivity measurement system described by example herein, the computer system can include a robust operating and application program having the computer executable instructions for performing one or more of the above processes. Additionally, one or more of the local and remote user interfaces, operations system and remote operations system can include, among other application software programs with computer executable instructions, a thin client application for communicating and interactively operating with one or more controllers as described above by way of example.

In accordance with the practices of persons skilled in the art of computer programming, the present disclosure is described below with reference to symbolic representations of operations that are performed by the processing system 70. Such operations are sometimes referred to as being computer-executed. It will be appreciated that the operations which are symbolically represented include the manipulation by the CPU 74 of electrical signals representing data bits and the maintenance of data bits at memory locations in the memory system 76, as well as other processing of signals. The memory locations where data bits are maintained are physical locations that have particular electrical, magnetic, or optical properties corresponding to the data bits. The disclosure can be implemented in a program or programs, comprising a series of instructions stored on a computer-readable medium. The computer-readable medium can be any of the devices, or a combination of the devices, described above in connection with the memory system 76.

It should be understood to those skilled in the art, that some embodiments of systems or components described herein may have more or fewer computer processing system components and still be within the scope of the present disclosure.

When describing elements or features and/or embodiments thereof, the articles "a", "an", "the", and "said" are intended to mean that there are one or more of the elements or features. The terms "comprising", "including", and "having" are intended to be inclusive and mean that there may be additional elements or features beyond those specifically described.

Those skilled in the art will recognize that various changes can be made to the exemplary embodiments and implementations described herein without departing from the scope of the disclosure. Accordingly, all matter contained in the above description or shown in the accompanying drawings should be interpreted as illustrative and not in a limiting sense.

It is further to be understood that the processes or steps described herein are not to be construed as necessarily requiring their performance in the particular order discussed or illustrated. It is also to be understood that additional or alternative processes or steps may be employed.

**Claims**

1. A system for stabilizing a measurement of radioactivity comprising:

   a stabilization source (46) configured to generate predetermined gamma emissions;
   a detector (44) for detecting gamma emissions from the stabilization source (46) and a radioactive source having unknown radioactivity positioned proximate to the detector (44) for measurement by the system (30); and
   a processing module (62) coupled to the detector (44) for determining counts of gamma emissions greater than a measurement threshold and counts of gamma emissions greater than a stabilization threshold, the stabilization threshold being different than the measurement threshold, and configured to determine a stabilization factor responsive to the counts greater than the measurement threshold and the counts greater than the stabilization threshold, to determine a drift in the measurement of radioactivity responsive to the counts greater than the stabilization threshold, to calculate a stabilized count of measured gamma emissions responsive to the counts greater than the measurement threshold, the stabilization factor, and the drift, and to generate a stabilized measurement of radioactivity responsive to the stabilized count.

2. The system of claim 1, wherein the radioactive source includes a calibration source having two or more levels of predetermined radioactivity, wherein the processing module (62) is configured to determine the stabilization factor from the counts greater than the measurement threshold and the counts greater than the stabilization threshold responsive to gamma emissions from the calibration source and the stabilization source (46).

3. The system of claim 1 or claim 2, wherein the processing module (62) is configured to determine a reference count of gamma emissions greater than stabilization threshold during the calibration and to determine the drift responsive to the reference count and one or more counts of gamma emissions greater than the stabilization threshold associated with a measurement of a radioactive source, wherein the one or more counts of gamma emissions greater than the stabilization threshold associated with the measurement of the radioactive source includes at least one of a count prior to the measurement of the radioactive source and a count following the measurement of the radioactive source.

4. The system of any one of the preceding claims, wherein the processing module (62) is configured to determine a slope of a first calibration curve plotting the counts greater than the stabilization threshold and a slope of a second calibration curve plotting the counts greater than the measurement threshold, wherein the stabilization factor includes a ratio of the slope of the second calibration curve over the slope of the first calibration curve.

5. The system of any one of the preceding claims, wherein the processing module (62) is configured to determine a relationship between a count of gamma emissions greater than the measurement threshold during calibration responsive to the calibration source and a measured level of radioactivity and adjust the stabilized count of measured gamma emissions responsive to the determined relationship for generating the stabilized radioactivity measurement, the processing module (62) being configured to determine the relationship utilizing a method selected from the group consisting of a regression analysis, determining a regression fit, determining a plurality of coefficients, plotting a curve, preparing a model, determining a formula, and preparing a table, and
   wherein the stabilization source (46) and the detector (44) are configured to enable the detector (44) to continuously detect gamma emissions from the stabilization source (46) during the presence and the absence of a radioactive source.

6. The system of any one of the preceding claims, wherein the processing module (62) is configured to determine a reference count of gamma emissions greater than the stabilization threshold during a calibration and to determine the drift responsive to the reference count and one or more counts of gamma emissions greater than the stabilization threshold associated with a measurement of a radioactive source, wherein the one or more counts of gamma emissions greater than the stabilization threshold associated with the measurement of the radioactive source includes at least one of a count prior to the measurement of the unknown radioactive source and a count following the measurement of the radioactive source.

7. The system of any one of the preceding claims, wherein the processing module (62) is configured to determine an enrichment of fuel in a fuel rod for a nuclear reactor in response to the stabilized measurement of radioactivity.

8. The system of any one of the preceding claims, wherein the processing module (62) includes a processor (74) and a memory (76) including computer executable instructions configured to determine the stabilization factor and the drift, calculate the stabilized count, and generate the stabilized measurement of radioactivity and wherein the measurement threshold is selected to optimize the counting of the gamma emissions from fission and the stabilization threshold is selected from the group of thresholds consisting of a photopeak of the detector (44), a maximized sensitivity, a peak of the stabilization source (46), and an energy level greater than an energy level of the measurement threshold.

9. The system of any one of the preceding claims, further comprising
   a splitter (56) coupled to the detector (44) to receive the detected gamma emissions from the detector (44) and to provide a first portion and a second portion;
   a measurement discriminator (58) configured to receive the first portion of the detected gamma emissions from the detector (44) and generate counts from gamma emissions greater than the measurement threshold; and
   a stabilization discriminator (64) configured to receive the second portion of the detected gamma emissions from the detector (44) and generate counts from gamma emissions greater than the stabilization threshold, and
   wherein the processing module (62) is configured to determine the stabilization factor correlating a change about the measurement threshold to a change about the stabilization threshold during a system calibration and determine the drift as a change in a gamma emission count greater than the stabilization threshold as received from the stabilization source (46) during calibration to a gamma emission count greater than the stabilization threshold from the stabilization source (46) during measurement of the radioactive source.

# FIG. 1

# FIG. 2

# FIG. 3

# FIG. 4

# FIG. 5

# FIG. 6

# FIG. 7

EP 1 927 995 A2